# EUROPEAN PATENT SPECIFICATION

(11) **EP 4 055 621 B1**
(45) Date of publication and mention of the grant of the patent: **25.12.2024**
(21) Application number: 19849047.6
(22) Date of filing: 05.12.2019
(51) Int. Cl.: H01H 79/00, H01H 39/00, B60L 3/04

(54) **SWITCH FOR INTERRUPTION OF A DIRECT CURRENT CIRCUIT POWERED BY TWO ELECTRIC VOLTAGE SOURCES**
SCHALTER ZUR UNTERBRECHUNG EINER GLEICHSTROMSCHALTUNG MIT ZWEI ELEKTRISCHEN SPANNUNGSQUELLEN
INTERRUPTEUR DESTINÉ À INTERROMPRE UN CIRCUIT À COURANT CONTINU ALIMENTÉ PAR DEUX SOURCES DE TENSION ÉLECTRIQUE

(30) Priority: 06.11.2019 SI 201900212
(43) Date of publication of application: 14.09.2022
(73) Proprietor: ETI Elektroelement, d.o.o., 1411 Izlake (SI)
(72) Inventor: KOPRIVSEK, Mitja, 1411 Izlake (SI); LEBAR, Brane, 1410 Zahorje ob Savi (SI)
(74) Representative: Borstar, Dusan
(86) International application number: PCT/SI2019/000009
(87) International publication number: WO 2021/091497

(56) References cited:
- EP-A1- 2 811 548
- EP-B1- 2 811 548
- WO-A1-2019/027374
- WO-A1-2019/177546
- US-A1- 2019 283 626

## Description

The invention refers to a switch, which is suitable for interruption of a DC electric circuit comprising at least a load and two directly with each other connected electric voltage sources.

In this, the invention is rest on a problem, how to interrupt quickly and efficiently such electric circuit, when needed, wherein after said interruption each potential contact between the load and anyone of said electric voltage sources would have to be eliminated, and moreover, also each potential interaction between said load and any other loads or electric circuits, which might be electrically interconnected with said load, would also have to be eliminated.

In particular in the field of electrically powered vehicles there is a need, that instead of powering by means of a single electric voltage source, a vehicle should be powered by two electric voltage sources. Namely, in by such approach the vehicle can still be powered, although the one of said electric voltage sources is out of order. However, in the field of the vehicles there is also always a required, that in emergency cases the electric circuit must be promptly interrupted, which is e.g. important by crash or other damages on the vehicle, since otherwise this could lead to uncontrolled establishing of irregular circuits, short circuit and consequently to generation of fire.

A switch for interrupting of a DC electric circuit with a single electric voltage source is disclosed in WO 2019/177546. Such prior art concept provides an DC or AC electric circuit and at least one electric load, which is via a primary and secondary branch of a main electric conductor connected with said electric voltage source, wherein an alternative electric conductor is connected with at least one of said branches of the main electric conductor, so that in each pre-defined circumstances i.e. by fulfilling each pre-determined conditions, said branch is physically interrupted, upon which the electric current as previously present in said branch, is then re-directed through said alternative electric conductor. Said alternative electric conductor, which is in parallel connected with corresponding branch of the main electric conductor, consists of two mutually aligned sections, which are each per se connected with corresponding branch of the main electric conductor and between which there is an electric insulating gap, wherein said branch of the main electric conductor includes a mechanically removable and electrically conductive section, which is in pre-defined circumstances i.e. by fulfilling any of the pre-defined conditions by means of a corresponding mechanical impact removable apart from the rest of said branch and is irreversibly displaceable into said gap between both sections of the alternative conductor, which herewith becomes bridged and electrically conductive. In addition to said electric conductors, also a pyrotechnic actuator is foreseen, which is adjusted for being triggered in pre-defined circumstances when each pre-defined conditions are fulfilled, and is arranged adjacent to said removable section of said weakened branch of the main conductor, so that said section is then by means of said pyrotechnic actuator mechanically removable apart from said branch and displaceable into said gap between both sections of the alternative conductor. Such concept may be successfully exploited in electric circuits having a single electric voltage source, but not also in circuits where two electric sources would be integrated. Moreover, a HV energy storage device is disclosed in US 2019/0283626 A1.

The present invention refers to a switch for interruption of a direct current circuit, wherein two DC electric voltage sources are integrated within said circuit, which are in serial connected with each other and are both via a main electric conductor electrically connected with at least one electric load.

According to the invention the previously mentioned technical problem is resolved in such way that said main electric conductor is in the area between said electric voltage sources and said load bridged by a supplemental electric conductor, which is in parallel electrically connected with said sources and also with said load, and is prior to activation of the switch, namely during regular operation of the electric circuit, interrupted by means of a gap and is consequently electrically impermeable. On the other hand, an electrically conductive branch with integrated electric fuse with a melting member is in parallel connected to said main conductor in two apart from each other located connecting points in the area between both electric voltage sources. Said main conductor is in the intermediate area between said connecting points furnished with a removable section, which is in pre-determined conditions removable apart from the main conductor and irreversibly displaceable into the gap in said supplemental electric conductor, which herewith becomes electrically conductive, while simultaneously the main electric conductor upon removing said section there-from becomes electrically impermeable.

In a preferred embodiment of the invention said section of the main conductor is displaceable into the gap in the supplemental conductor by means of a pyro-switch, which is preferably activated by means of a sensor. The last is generally any sensor, which is suitable for activation of said pyro-switch, bit preferably it is an acceleration detecting sensor.

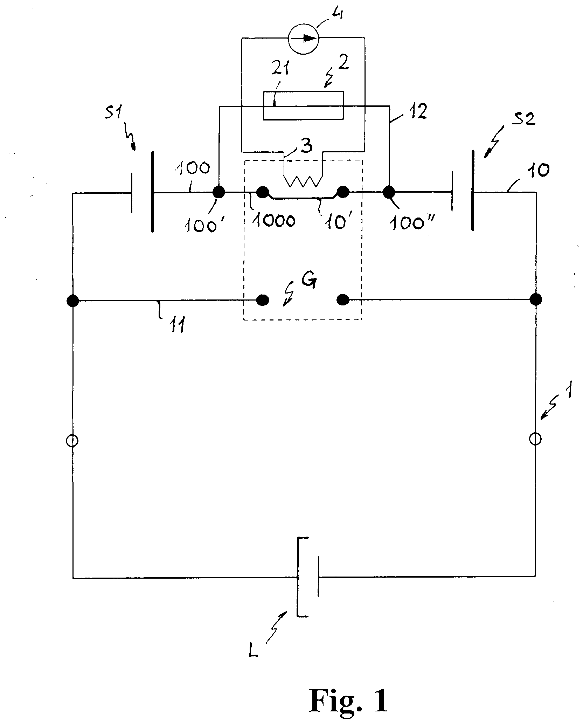

The invention will be further explained on the basis of an embodiment, which is presented in the attached drawings, in which
- Fig. 1: is a schematically presented switch according to the invention, which is suitable for interrupting of a DC electric circuit, during regular energizing of said electric circuit and corresponding load by means of two electric voltage sources;

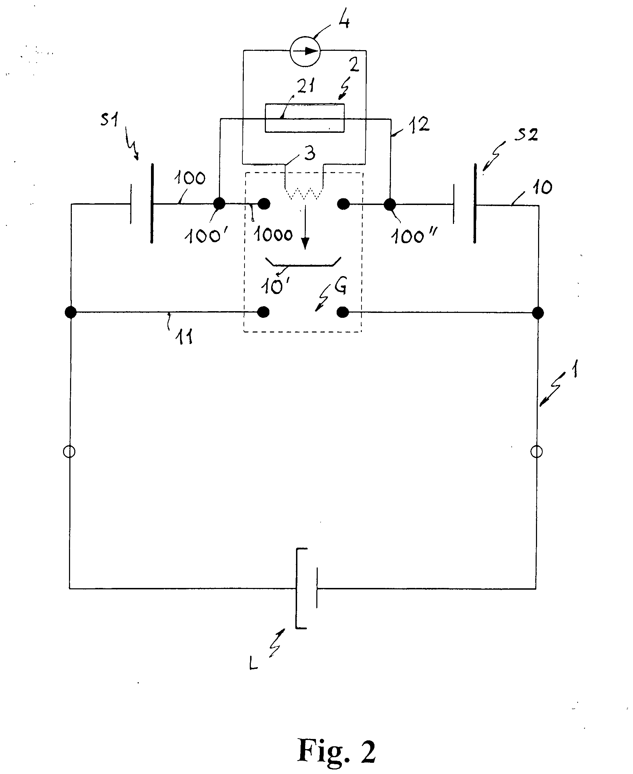

- Fig. 2: is a switch according to Fig. 1, presented in a moment, when the pyro-switch is activated on the basis of signal received from sensor, and the electric circuit is interrupted;

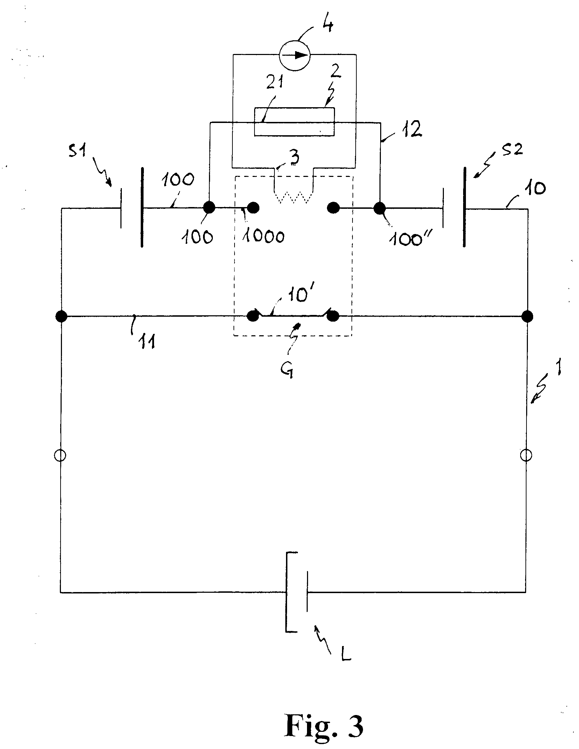

- Fig. 3: is a switch according to Fig. 1, presented in a moment, when upon interruption of the main circuit another electric circuit through the supplemental conductor and the fuse is established; and

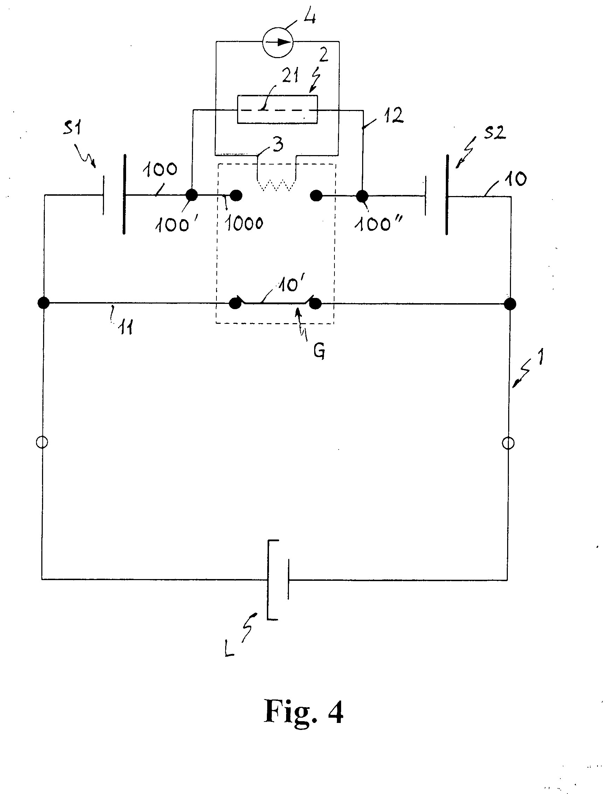

- Fig. 4: is a switch according to Fig. 1 in another state, in which upon interruption of the main circuit and establishing of another circuit through the supplemental conductor and fuse also the melting member of said fuse becomes interrupted.

Switch according to the invention is suitable for interruption of a direct current circuit 1, wherein two DC electric voltage sources S1, S2 are integrated within said circuit 1, which are in serial connected with each other and are both via a main electric conductor 10 electrically connected with at least one electric load L.

Said main electric conductor 10 is in the area between said electric voltage sources S1, S2 and said load L bridged by a supplemental electric conductor 11, which is in parallel electrically connected with said sources S1, S2 and also with said load L, and is prior to activation of the switch, namely during regular operation of the electric circuit 1, interrupted by means of a gap G and is consequently electrically impermeable.

An electrically conductive branch 12 with integrated electric fuse 2 with a melting member 21 is in parallel connected to said main conductor 10 in two apart from each other located connecting points 100', 100" in the area 100 between both electric voltage sources S1, S2.

In the intermediate area 1000 between said connecting points 100', 100" said main conductor 10 is furnished with a removable section 10', which is in pre-determined conditions removable apart from the main conductor 10 and irreversibly displaceable into the gap G in said supplemental electric conductor 11, which herewith becomes electrically conductive, while simultaneously the main electric conductor 10 upon removing said section 10' there-from becomes electrically impermeable. Said removable section 10' and the area of the supplemental conductor 11 adjacent to the gap G may optionally be designed essentially in a manner, which is used in the previously cited prior art (WO 2019/177546).

In the shown embodiment said section 10' of the main conductor 10 is displaceable into the gap G in the supplemental conductor 12 by means of a pyro-switch 3 activated by means of a sensor 4, which is suitable for detecting of accelerations. By regular operating of the electric circuit 1 said load L is via the main electric conductor integrated into the electric circuit, which is energized by two electricity sources S1, S2. Since the resistance of the fuse 2 is essentially higher than the resistance of conductors 10, 11, in such operational mode there is no, or at least practically no current through the branch 12.

By interruption of the circuit 1 due to emergency reasons, e.g. by crash of an electrical vehicle or the like, i.e. as soon as each pre-determined conditions are fulfilled, the sensor 4 activates said pyro-switch 3, which leads to removal of the section 10' from the main conductor 10 and displacement of said section 10' into a gap G in the supplemental conductor 11. As a consequence, on the one hand the main conductor 10 becomes interrupted in its intermediate area 1000 between both electricity sources S1, S2, and on the other hand the load L becomes integrated into a short-circuit established through the supplemental conductor 11, the gap G in which is bridged by said section 10' of the main conductor 10 and is therefore electric conductive. In such case the current may still flow only through the branch 12, which on the one hand allows discharging of the load L and also potential other loads and electricity sources which might somehow be connected with it, and on the other hand this also leads to heating and melting of the melting member 21 in the fuse 2, upon which also the branch 12 is interrupted and becomes electrically impermeable. Upon that, the electrically discharged load L is via the supplemental conductor 11 integrated into its own electric circuit, actually a short-circuit, while the electricity sources S1, S2 via the supplemental conductor 11 remain integrated in a separate circuit, which is however in the intermediate area between the sources S1, S2, physically interrupted and evidently electrically impermeable. Those skilled in the art will understand that the length of the section 10' should be sufficient to prevent generation of electric arc upon removal of said section 10' from the main conductor 10.

## Claims

1. Switch for interruption of a direct current circuit (1), wherein two DC electric voltage sources (S1, S2) are integrated within said circuit (1), which are in serial connected with each other and are both via a main electric conductor (10) electrically connected with at least one electric load (L), wherein said main electric conductor (10) is in the area between said electric voltage sources (S1, S2) and said load (L) bridged by a supplemental electric conductor (11), which is in parallel electrically connected with said sources (S1, S2) and also with said load (L), and is prior to activation of the switch, namely during regular operation of the electric circuit (1), interrupted by means of a gap (G) and is consequently electrically impermeable,
while in the intermediate area (1000) between said connecting points (100', 100") said main conductor (10) is furnished with a removable section (10'), which is in pre-determined conditions removable apart from the main conductor (10) and irreversibly displaceable into the gap (G) in said supplemental electric conductor (11), which herewith becomes electrically conductive, while simultaneously the main electric conductor (10) upon removing said section (10') there-from becomes electrically impermeable,
**characterized in that** an electrically conductive branch (12) with integrated electric fuse (2) with a melting member (21) is in parallel connected on the one hand to said load (L) and on the other hand also to said main conductor (10) in two apart from each other located connecting points (100', 100") in the area (100) between both electric voltage sources (S1, S2).

2. Switch according to Claim 1, **characterized in that** said section (10') of the main conductor (10) is displaceable into the gap (G) in the supplemental conductor (2) by means of a pyro-switch (3).

3. Switch according to Claim 2, **characterized in that** said pyro-switch (3) is activated by means of a sensor (4).

4. Switch according to Claim 3, **characterized in that** said sensor (4), which is used for activation of the pyro-switch (3), is an acceleration detecting sensor.

## Patentansprüche

1. Schalter zum Unterbrechen eines Gleichstromschaltkreises (1), wobei zwei elektrische Gleichspannungsquellen (S1, S2) innerhalb des Schaltkreises (1) integriert sind, die in Reihe miteinander verbunden sind, und beide jeweils über einen elektrischen Hauptleiter (10) elektrisch mit mindestens einer elektrischen Last (L) verbunden sind, wobei der elektrische Hauptleiter (10) im Bereich zwischen den elektrischen Spannungsquellen (S1, S2) und der Last (L) durch einen ergänzenden elektrischen Leiter (11) überbrückt sind, der parallel elektrisch mit den Quellen (S1, S2) und auch mit der Last (L) verbunden ist, und der vor Aktivierung des Schalters, nämlich während des regulären Betriebs des elektrischen Schaltkreises (1), durch einen Spalt (G) unterbrochen ist und folglich elektrisch undurchlässig ist, während in dem Zwischenbereich (1000) zwischen den Verbindungspunkten (100', 100") der Hauptleiter (10) mit einem entfernbaren Abschnitt (10') versehen ist, der unter vorbestimmten Bedingungen von dem Hauptleiter (10) entfernbar ist und irreversibel in den Spalt (G) in dem ergänzenden elektrischen Leiter (11) verlagerbar ist, der dadurch elektrisch leitend wird, während gleichzeitig der elektrische Hauptleiter (10) beim Entfernen des Abschnitts (10') von diesem elektrisch undurchlässig wird,
**dadurch gekennzeichnet, dass** ein elektrisch leitender Zweig (12) mit einer integrierten elektrischen Sicherung (2) mit einem schmelzenden Element (21) parallel einerseits mit der Last (L) und andererseits auch mit dem Hauptleiter (10) an zwei voneinander beabstandeten Verbindungspunkten (100', 100") in dem Bereich (100) zwischen beiden elektrischen Spannungsquellen (S1, S2) verbunden ist.

2. Schalter nach Anspruch 1, **dadurch gekennzeichnet, dass** der Abschnitt (10') des Hauptleiters (10) durch einen Pyroschalter (3) in den Spalt (G) in dem ergänzenden Leiter (2) verlagerbar ist.

3. Schalter nach Anspruch 2, **dadurch gekennzeichnet, dass** der Pyroschalter (3) durch einen Sensor (4) aktiviert wird.

4. Schalter nach Anspruch 3, **dadurch gekennzeichnet, dass** es sich bei dem Sensor (4), der zur Aktivierung des Pyroschalters (3) verwendet wird, um einen Beschleunigungserkennungssensor handelt.

## Revendications

1. Interrupteur pour l'interruption d'un circuit à courant continu (1), dans lequel deux sources de tension électrique continue (S1, S2) sont intégrées dans ledit circuit (1), qui sont connectées en série l'une à l'autre et sont toutes deux connectées électriquement à au moins une charge électrique (L) par l'intermédiaire d'un conducteur électrique principal (10), dans lequel ledit conducteur électrique principal (10) se trouve dans la zone entre lesdites sources de tension électrique (S1, S2) et ladite charge (L) pontée par un conducteur électrique supplémentaire (11), qui est connecté électriquement en parallèle auxdites sources (S1, S2) et également à ladite charge (L), et est interrompu avant l'activation de l'interrupteur, à savoir pendant le fonctionnement normal du circuit électrique (1), au moyen d'un espace (G) et est par conséquent électriquement imperméable, tandis que, dans la zone intermédiaire (1000) entre lesdits points de connexion (100', 100"), ledit conducteur principal (10) est pourvu d'une section amovible (10'), qui est amovible séparément du conducteur principal (10) dans des conditions prédéterminées et déplaçable de manière irréversible dans l'espace (G) dans ledit conducteur électrique supplémentaire (11), qui devient ainsi électriquement conducteur, tandis que simultanément le conducteur électrique principal (10) devient électriquement imperméable lors du retrait de ladite section (10') de celui-ci,
**caractérisé en ce qu'**une branche électriquement conductrice (12) avec fusible électrique intégré (2) avec un élément de fusion (21) est connectée en parallèle d'une part à ladite charge (L) et d'autre part également audit conducteur principal (10) en deux points de connexion (100', 100") situés à distance l'un de l'autre dans la zone (100) entre les deux sources de tension électrique (S1, S2).

2. Interrupteur selon la revendication 1, **caractérisé en ce que** ladite section (10') du conducteur principal (10) peut être déplacée dans l'espace (G) dans le conducteur supplémentaire (2) au moyen d'un pyro-interrupteur (3).

3. Interrupteur selon la revendication 2, **caractérisé en ce que** ledit pyro-interrupteur (3) est activé au moyen d'un capteur (4).

4. Interrupteur selon la revendication 3, **caractérisé en ce que** ledit capteur (4), qui est utilisé pour l'activation du pyro-interrupteur (3), est un capteur de détection d'accélération.
